# EUROPEAN PATENT APPLICATION

(11) **EP 1 106 079 A1**
(43) Date of publication of application: **13.06.2001**
(21) Application number: 00310329.8
(22) Date of filing: 21.11.2000
(51) Int. Cl.: A23L 1/0522, A23L 1/187, A23L 1/40

(54) **Dry mixes comprising partially pregelatinised starch**

(30) Priority: 07.12.1999 GB 9928754
(71) Applicant: CERESTAR HOLDING B.V., NL-4551 LA Sas van Gent (NL)
(72) Inventor: Bonnet, Didier Charles Robert, 1180 Uccle (BE)
(74) Representative: Wilkinson, Stephen John

(57) **Abstract**

The present invention relates to dry mixes based on partially gelatinised starch and which are suitable for preparing static heated or microwaveable food compositions. The partially pregelatinised starch is applied as a new thickening system for microwave instant powders. Using a homogeneous and uniform partially gelatinised starch can overcome significant problems, such as powder segregation and simplifies the preparation of the dry mix composition.

## Description

### Technical field

The present invention relates to dry mixes for starch-based food compositions containing partially pregelatinised starch. When poured into a liquid, the partially pregelatinised starch develops part of its viscosity and rapidly disperses upon heating for full viscosity developing. Dry mixes comprising partially pregelatinised starch are particularly useful for preparing food compositions, which are heated by microwave or static heating systems.

### Background of the invention

The trend in recent years has been towards convenience in food preparation. Instant mixes, containing fully pregelatinised starch, are increasingly popular due to their convenience. These mixtures merely have to be mixed with aqueous fluid, such as cold water and milk, and allowed to set. Even though instant mixes offered convenience, the preferred thickeners are still uncooked starches due to their superior short, smooth and creamy texture. Use of uncooked starch requires traditional heating procedures, i.e. bringing the solution to boil and continuous stirring in order to obtain a homogeneous and non-burnt slurry. However this method is very time-consuming and not very practical. The further trend towards convenience in food preparation can be reached by cooking in microwave ovens. Microwave processing offers advantages over conventional oven heating, and the common practice for use of microwave ovens is to merely place the food in the oven for a short period of time.

A compromise between obtaining a superior texture such as is provided by uncooked starch and applying convenient heating process such as microwave, can be reached by stabilising the suspension of the powder at least during the heating time by adding rapidly hydrating hydrocolloids, e.g. xanthan gum, carrageenan or phosphate salts.

US Patent 4,944,955 describes a blend of uncooked starch and spray-cooked, dried, fully pregelatinised starch, which is used as thickening agent. According to one embodiment of the invention a cooked pudding mix is prepared which contains from about 50 to 80% by weight carbohydrate sweetening and/or bulking agents, 8 to 20% by weight uncooked starch and from 12 to 20% by weight of spray-cooked and dried, fully pregelatinised starch. A cold-water dispersible hydrocolloid gum, such as xanthan gum or carrageenan, is also included in the mix at a level of from 0.015 to 1% by weight to enhance suspension of uncooked starch particles. The thus prepared food mixes are suitable for both microwave and stovetop preparations. The fully pregelatinised starch, having a relatively-coarse particle size, is useful as a means to quickly and readily provide viscosity when an uncooked starch-containing dry mix product is blended with milk or water. The thickening agent is a blend of two components whereby each component brings its own functionality. The uncooked starch in the blend is responsible for the superior final texture, while the fully pregelatinised starch stabilises the suspension during cooking. Fully pregelatinised starch used in the described invention is prepared according to the process described in US patent 4,280,851.

US patent 4,280,851 relates to a process and apparatus for uniformly cooking materials, and the products formed thereby, and more particularly relates to a multi-fluid spray nozzle apparatus and process for atomising a material such as starch, and for simultaneous cooking that material. Preferably, a material capable of gelatinisation, such as starch is uniformly and completely gelatinised by the process and by the use of the apparatus of this invention.

EP 0 948 904 relates to a process for preparing highly functional flour which can substitute native and modified starches in the preparation of food products. The flour prepared according to the described hydro-thermal process has a gelatinisation degree of 20% to 95%, and is composed of about 80% starch, zein, and other components that participate all together for developing texture.

US 4,937,087 relates to a method for preparing farina which is suitable for one-step microwave preparation by the consumer. The method comprises the step of subjecting raw farina to a high temperature, short time cooking step in direct contact with air. The thus obtained farina has a gelatinisation degree of about 10% to 80% and is primarily composed of starch and protein.

US 4,025,657 relates to partially gelatinised spheroidal starch particles obtained by cold extrusion. Said starch particles, having a level of gelatinisation in the range of at least 45 up to about 70%, are suitable as ingredient in mass-produced pudding processed in an automated high temperature canning system, while applying constant stirring. Under such canning conditions distinct, uniform translucent starch pearls are formed, and said pearls provide said pudding with a distinct tapioca-like appearance, texture and mouthfeel.

To date the stabilisation of the starch-based suspension, which can be used in microwave ovens, is based on the interaction of at least two different components:
1. mixing of uncooked starch and rapidly hydrating hydrocolloids, e.g. xanthan gum, carrageenan or phosphate salts, or
2. mixing of uncooked and fully pregelatinised starch into the dry mix.
3. interaction of starch, protein and/or other minor components present in farina or flour.

There exist a need for suspensions, which can be heated by microwave cooking or static heating (i.e. without stirring), and which are stabilised by one main component, whereby that single component:
a) is readily dispersible in water
b) stabilises the suspension during the heating time
c) develops during heating full viscosity and final texture, and
d) is responsible for the superior final texture comparable to the texture of products based on uncooked starch.

### Summary of the invention

The present invention relates to dry mixes for starch-based food compositions containing partially gelatinised starch, consisting of granules pregelatinised to a gelatinisation degree of between 30% to 90%, preferably between 50% to 77%, more preferably between 55% to 77%, most preferably between 60% and 75%, and said food compositions are suitable for static heating or microwave cooking.

The present invention discloses dry mixes wherein partially pregelatinised starch is present in an amount between 10% w/w to 40% w/w on dry base.

The present invention discloses food compositions selected from the group consisting of bakery products, dairy products, sauces, soups, desserts and drink powders.

The present invention further discloses a dry pudding mix containing on dry base between 10% w/w to 30% w/w partially pregelatinised starch, preferably between 15% w/w to 25 % w/w partially pregelatinised starch, more preferably between 18% w/w to 22 w/w partially pregelatinised starch.

The present invention relates further to a dry bakery cream mix containing on dry base between 15% w/w to 30% w/w partially pregelatinised starch, preferably between 20%w/w to 30% w/w partially pregelatinised starch, more preferably between 22% w/w to 27% w/w partially pregelatinised starch.

The present invention further discloses a dry Bechamel sauce mix containing on dry base between 15% w/w to 40% w/w partially pregelatinised starch, preferably between 23% w/w to 35% w/w partially pregelatinised starch, more preferably between 25% w/w to 30% w/w partially pregelatinised starch.

The partially pregelatinised starch can be produced by any known method for preparing pregelatinised starch, such as spray-cooking, roll-drying or spray-drying of cooked starch, preferably by spray-cooking. The spray-cooking process for preparing these starches is characterised in that the spray-drying tower inlet temperature, steam pressure and correct ratio of steam to starch slurry are selected to uniformly partially pregelatinise the starch granules.

### Brief description of the drawings

Figure 1 is a picture, taken with an optical microscope (Zeiss), of partially pregelatinised regular maize starch dissolved in water. Polarised light has been used to evaluate the birefringent patterns of the starch granules. Partially gelatinised starch is characterised by weakening of the birefringence, especially in the centre of the granules, compared to uncooked starch. The crystalline areas are still visible at the edges of the granule.

Figure 2 is a picture, taken with an optical microscope (Zeiss), of mix of instant modified waxy starch and uncooked regular maize starch in cold water traditionally used in microwave application. Separate and distinct granules can easily be recognised.

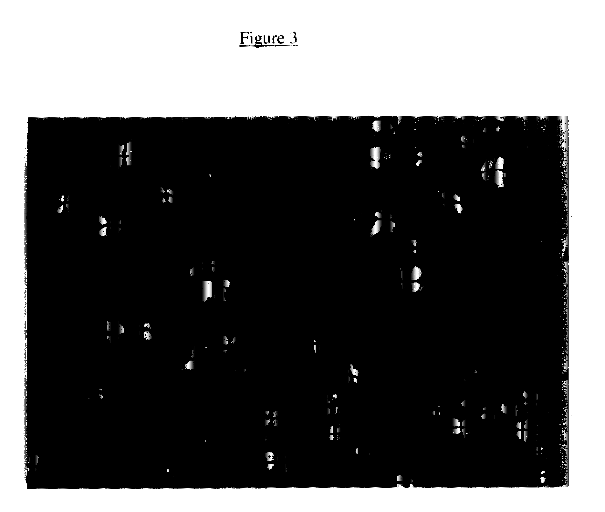

Figure 3 is a picture, taken with an optical microscope (Zeiss), of uncooked regular maize starch in cold water. The picture clearly shows the birefringent property of the starch granules.

Figure 4 is a picture, taken with an optical microscope (Zeiss), of cooked-up regular maize starch (i.e. pregelatinised starch) in hot water. Pregelatinised starch is characterised by the absence of birefringence. The crystallinity is completely lost.

### Detailed description of the invention

The present invention relates to dry mixes for starch-based food compositions containing partially gelatinised starch, consisting of granules pregelatinised to a gelatinisation degree of between 30% to 90%, preferably between 50% to 77%, more preferably between 55% to 77%, most preferably between 60% and 75%, and said food compositions are suitable for static heating or microwave cooking.

The gelatinisation degree can be determined by measuring melting enthalpy by Differential Scanning Calorimetry (DSC), according to the method described by Remon in Int. J. of Pharmaceutics 56, (1989), 51-63. There exists a linear relationship between the melting enthalpy (i.e. gelatinisation energy) and the degree of gelatinisation. The difference between the melting enthalpy of uncooked starch and partially pregelatinised starch gives a measure for the degree of gelatinisation.

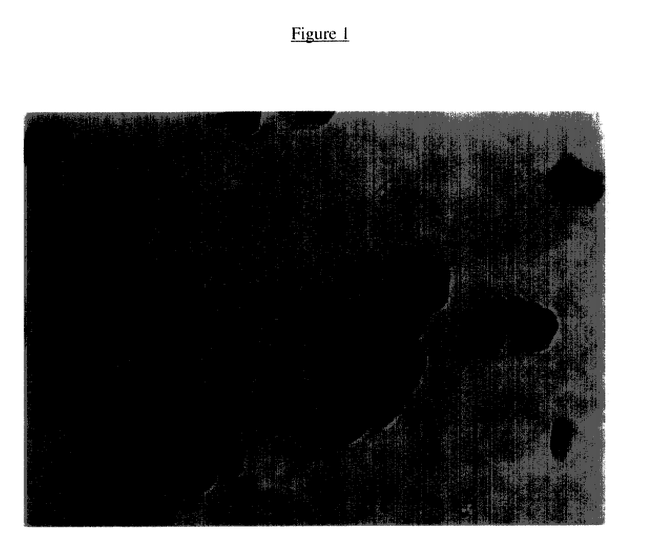

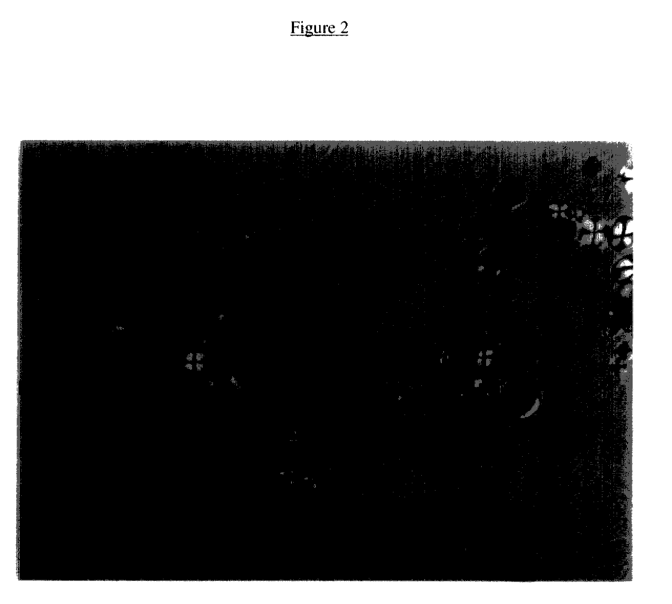

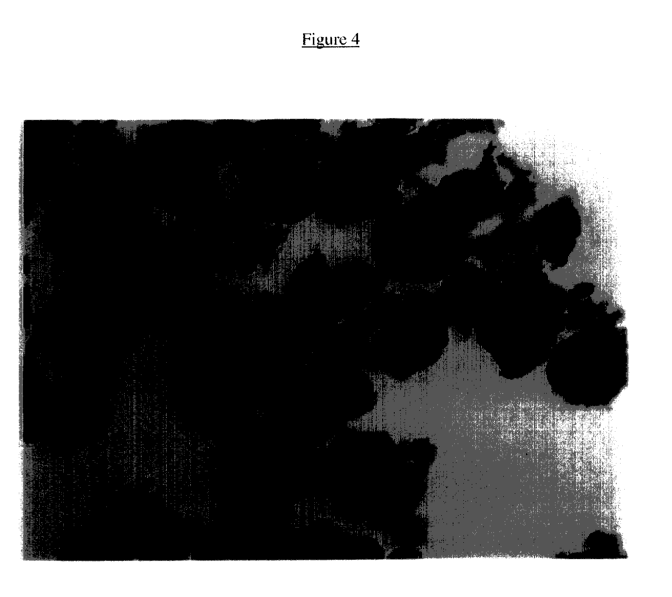

The gelatinisation degree is further determined by measuring residual birefrigence by microscopic analysis. The microscopic analysis of the partially pregelatinised starch is made with an optical microscope (Zeiss). Starch is dispersed into cold water at a concentration of 5% dry substance. A droplet of this solution is put on a microscopy glass, and covered by a fine glass. The sample is observed under polarised light. The analysis shows that the product is not just a mix of pregelatinised and uncooked starch granules, but all the granules are partially pregelatinised in a homogeneous way. This is clearly seen by comparing figure 1 with figure 2 (picture of mix of instant modified waxy starch and uncooked regular maize starch in cold water). Pregelatinised starch is characterised by the absence of birefringence (figure 4) while partially gelatinised starch is characterised by weakening of the birefringence (figure 1).

Further characterisation of the partially pregelatinised starch can be achieved by viscosity measurements.

The starch used in the present invention may be from a variety of sources such as corn, waxy maize, potato, rice, wheat, cassava, sorghum, and the like.

The partially pregelatinised starch can be produced by any known method for preparing pregelatinised starch, such as spray-cooking, roll-drying or spray-drying of cooked starch, preferably by spray-cooking.

In case the partially pregelatinised starch is prepared by spray-cooking of unmodified (native) or modified starch, an apparatus as is described in US 4,280,851, is applied.

An aqueous starch slurry is sprayed through an atomisation aperture in the nozzle. A heating medium such as steam is injected through another aperture in the nozzle and into the spray. On exiting the nozzle vent aperture, the resultant partially pregelatinised starch is in a finely sized atomised state and is easily dried in the spray-drying tower. The dried partially pregelatinised starch can be recuperated in bags to be readily used in microwave application or it can be re-injected to the top of the tower, such that the trajectory of that recirculating dry powder crosses the spray pattern of the spray-cooked nozzle in order to produce agglomerated particles. The agglomerated particles are recuperated in an external fluid bed. The product from the fluid bed was sieved in a sifter and the oversize fraction was disrupted in a mill. The agglomeration and the particle size distribution of agglomerated partially pregelatinised starch can be controlled by the nozzle configuration and by the application of a sifter and a suitable mill to screen off and to mill an oversized fraction. The average particle size is closely related to the aperture of the top screen to be used in the sifter.

Furthermore the process parameters are correlated to the type of starch, and each type of starch has well-defined process parameters.

The process for preparing these partially pregelatinised starches is characterised in that the spray-drying tower inlet temperature, steam pressure, and the correct ratio of steam to starch slurry (weight steam/ weight starch slurry) is selected, and that only part of the crystalline structure of starch is removed, without too much swelling of the granules. The weight ratio of steam to starch slurry is within the range of 0.1 to 3. The steam pressure is higher than 5 bar, and the tower inlet temperature is between 150°C and 250°C.

For preparing partially gelatinised starch based on regular corn starch the weight ratio of steam to starch slurry is about 0.7 while the vapour pressure is about 12 bar at a steam flow rate of 420 to 450 kg per hour. The spray-drying tower had an inlet temperature of about 200 to 250°C and an outlet temperature of about 85 to 100°C.

Particularly the process parameters such as spray-drying tower inlet temperature, outlet temperature, flow rate of starch slurry and flow rate of steam, differ from the parameters of the spray-drying process for preparing uniform fully pregelatinised starch. In the process for preparing uniform fully pregelatinised starch according to example 2 of US 4,280,851 the starch slurry is pumped into the nozzle at a rate of 4.6 L/min per nozzle, with steam at a pressure of 150 psig being pumped into each nozzle at an estimated flow rate of 172 kg/h per nozzle. The spray-drying tower has an inlet temperature of about 150°C to 195°C and an outlet temperature of about 80 to 95°C.

The partially pregelatinised starch is completely dispersible in aqueous medium and develops when added to a liquid, part of its viscosity, just enough to avoid sedimentation of the dispersed powder. Furthermore like an uncooked starch, it has to be heated to develop its full viscosity. It confers also short, smooth and creamy texture. Surprisingly, partially pregelatinised starch possesses all the properties and functionalities which are normally brought by interactions of at least two components. Partially pregelatinised starch is characterised in that:
a) It is readily dispersible in water, and gives no sedimentation
b) It stabilises the suspension during the heating time
c) During heating full viscosity and final texture is developed, and
d) It is responsible for the superior final texture comparable to the texture of products based on uncooked starch,

Partially pregelatinised starch, which is consisting of granules pregelatinised to a gelatinisation degree of between 30% to 90%, preferably between 50% to 77%, more preferably between 55% to 77%, most preferably between 60% and 75%, is used in dry mixes, which are particularly useful for preparing food compositions by microwave heating or static heating systems. Furthermore the dry mixes contain the partially pregelatinised starch in an amount between 10% w/w to 40% w/w on dry base. Common usage of microwave ovens is to merely place the food in the oven for a short period of time. Static heating also refers to a method of cooking or heating whereby no stirring is involved.

Partially pregelatinised starch of the present invention develops part of its viscosity just enough to avoid sedimentation of the dispersed powder and compositions containing partially pregelatinised starch do not need to be stirred while bringing it to boil. Like an uncooked starch, it has to be heated to develop its full viscosity, but unlike uncooked starch continuous stirring of the suspension is not required. These properties make partially pregelatinised starch particular suitable for microwave cooking and static heating.

The food compositions containing the aforementioned dry mixes are selected from the group consisting of bakery products, dairy products, sauces, soups, desserts and drink powders. Typically the dry mixes of the current invention are used for preparing bakery creams, pie fillings, fruit fillings, crème desserts, puddings, custards, dessert sauces, and all food systems, which are susceptible to be prepared by static heating or by microwave heating and which include starch as thickener. Typical food compositions containing partially pregelatinised starch are:
- dry pudding mixes whereby the dry mix contains partially pregelatinised starch which is consisting of granules pregelatinised to a gelatinisation degree of between 30% to 90%, preferably between 50% to 77%, more preferably between 55% to 77%, most preferably between 60% and 75%, and said partially pregelatinised starch is present in an amount between 10% w/w to 30% w/w, preferably between 15% w/w to 25 % w/w, more preferably between 18% w/w to 22 w/w.
- dry bakery cream mixes characterised in that the dry mix contains partially pregelatinised starch which is consisting of granules pregelatinised to a gelatinisation degree of between 30% to 90%, preferably between 50% to 77%, more preferably between 55% to 77%, most preferably between 60% and 75%, and said partially pregelatinised starch is present in an amount between 15% w/w to 30% w/w, preferably between 20%w/w to 30% w/w, more preferably between 22% w/w to 27% w/w.
- dry Bechamel sauce mixes characterised in that the dry mix contains partially pregelatinised starch which is consisting of granules pregelatinised to a gelatinisation degree of between 30% to 90%, preferably between 50% to 77%, more preferably between 55% to 77%, most preferably between 60% and 75%, and said partially pregelatinised starch is present in an amount between 15% w/w to 40% w/w, preferably between 23% w/w to 35% w/w, more preferably between 25% w/w to 30% w/w.

Replacing mixtures of two components, consisting of uncooked starch and pregelatinised starch by one component i.e. partial pregelatinised starch has at least two main advantages. First of all the dry mix composition is simplified. Furthermore when dry-mixing the fine granules of uncooked starch with coarse instant pregelatinised starch powder segregation during storage and transport is occurring. By using a homogeneous and uniform partially gelatinised starch these significant problems are avoided. Partially pregelatinised starch brings the final texture of traditionally cooked starch just by static heating, which is certainly related to convenience and superior texture and organoleptic properties.

While coarse pregelatinised starches are utilised as an ingredient in instant pudding mixes, instant gravies and sauces, instant cereals and the like, partially pregelatinised starch is used in food compositions which require cooking for developing full viscosity. These cooked food compositions are characterised by very smooth textures, whereas the instant food compositions are generally described as being grainy, both from standpoint of appearance and mouthing characteristics. The dry mixes based on partially pregelatinised starch give after adding a liquid such as water and/or milk and subsequent heating, finished products which have a similar texture, appearance, and gel structure to compositions based on cooked starch. Taste panels confirm that the microwave-processed food compositions based on partially pregelatinised starch have similar texture and organoleptic properties as the traditional cooked food compositions. These traditional cooked food compositions lack the convenience of microwave cooking of food compositions prepared from partially pregelatinised starch.

When simply adding uncooked starch to boiling water, the starch rapidly forms lumps, which cannot be dispersed even with the most vigorous and extended stirring. One way to overcome the lumping problem is to disperse the starch completely in cold water and while continuous stirring the aqueous mixture is brought to boil so that the starch remain in suspension and an uniform starch gel or slurry is obtained. However, this method is very time-consuming and not very practical.

Partially pregelatinised starch gives food compositions with superior organoleptic properties such as food compositions based on native starches, and preparing the food compositions by microwave cooking or static heating is as convenient and user-friendly as the preparation of instant food compositions based on complete pregelatinised starch.

The invention is illustrated by way of the following examples.

### Example 1.

The partially pregelatinised corn starch was prepared by spray-cooking in a wide body spray-drier SF.

A starch slurry containing 37% dry solids was pumped into the nozzle at a rate of 602 kg per hour at a temperature of 22°C. Steam, as the heating medium at a pressure of 12.3 bars, was being pumped in the nozzle at an estimated flow rate of 436 kg per hour. The spray-drying tower had an inlet temperature of about 230°C and an outlet temperature of about 96°C, while the flow-rate of air was about 7700 kg per hour, the humidity of inlet air was 1.3% and the humidity of outlet air was 12.2% at 84°C.

The resultant starch fully (100%) consisted of whole granules, each granule being partially pregelatinised to approximately 60 to 80%. On exiting the nozzle vent aperture, the resultant partially pregelatinised starch was in a finely sized atomised state and was easily dried in the spray-drying tower. The dried partially pregelatinised starch had a fine granulometry wherein about 80% by weight of the starch passed through a 80µm screen.

The product thus obtained has a microscopic structure as can be seen in Figure 1.

### Example 2

The partially pregelatinised starch prepared according to the process described in example 1 was applied in a pudding mix.

The pudding mix was prepared with the following ingredients (expressed as weight%):

| | |
|---|---|
| Partially pregelatinised starch | 19.2 |
| Sucrose | 57.7 |
| Milk powder | 23.1 |
| Flavours and colours (Vanilla, cocoa...) | q.s. |

The dry pudding mix was prepared by blending the sucrose, and the starch followed by the remaining ingredients. 52 grams of the pudding mix was added to 148 ml of cold water in a glass bowl. After stirring for about 45 seconds the bowl was placed in a microwave oven at high power (1000 watts) for 50 seconds. The cooked pudding was stirred to eliminate any temperature gradient that might be present followed by storage at 6°C for about 1 hour.

The resulting pudding had a smooth, creamy texture equivalent to a stovetop cooked pudding.

### Example 3

The partially pregelatinised starch prepared according to the process described in example 1 was applied in a bakery cream mix.

The bakery cream mix was prepared with the following ingredients (expressed as weight %):

| | |
|---|---|
| Partially pregelatinised starch | 24.6 |
| Sucrose | 49.2 |
| Egg powder | 6.5 |
| Milk powder | 19.7 |
| Flavours and colours (Vanilla, cocoa...) | q.s. |

The dry bakery cream mix was prepared by blending the sucrose, the starch followed by the remaining ingredients. 61 grams of the pudding mix was added to 139 ml of cold water in glass bowls. After stirring for about 45 seconds the bowl was placed in a microwave oven at high power (1000 watts) for 50 seconds. The cooked bakery cream was stirred in order to eliminate any temperature gradient that might be present and stored at 6°C for about 1 hour.

The resulting bakery cream was short, smooth and can easily be cut like a stovetop bakery cream.

### Example 4

The partially pregelatinised starch prepared according to the process described in example 1 was applied in Béchamel sauce mix.

The Béchamel sauce mix was prepared with the following ingredients (expressed as weight %):

| | |
|---|---|
| Partially pregelatinised starch | 27.8 |
| Flour | 18.6 |
| Salt | 4.7 |
| Palm Fat (powder) | 20.9 |
| Milk powder | 27.8 |
| Pepper | 0.2 |
| Flavours | q.s. |

The dry Béchamel sauce mix was prepared by blending the flour, the starch followed by the remaining ingredients. 44 grams of the béchamel sauce mix was added to 157ml of cold water in glass bowls. After stirring for about 45 seconds the bowl was placed in a microwave oven at high power (1000 watts) for 50 seconds. The cooked Béchamel sauce was then stirred in order to eliminate any temperature gradient that might be present. The resulting Béchamel sauce had a smooth texture equivalent to a stovetop Béchamel sauce.

## Claims

1. Dry mixes for preparing food compositions characterised in that the dry mixes contain partially pregelatinised starch consisting of granules pregelatinised to a gelatinisation degree of between 30% to 90%, preferably between 50% to 77%, more preferably between 55% to 77%, most preferably between 60% and 75%, and said food compositions are suitable for static heating or microwave cooking.

2. Dry mixes according to claim 2 characterised in that the dry mixes contain partially pregelatinised starch in an amount between 10% w/w to 40% w/w on dry base.

3. Food compositions containing dry mixes according to claim 1 and 2 characterised in that the food compositions are selected from the group consisting of bakery products, dairy products, sauces, soups, desserts and drink powders.

4. A dry pudding mix characterised in that the dry mix according to claim 2 contains partially pregelatinised starch in an amount between 10% w/w to 30% w/w, preferably between 15% w/w to 25 % w/w, more preferably between 18% w/w to 22 w/w on dry base.

5. A dry bakery cream mix characterised in that the dry mix according to claim 2 contains partially pregelatinised starch in an amount between 15% w/w to 30% w/w, preferably between 20%w/w to 30% w/w, more preferably between 22% w/w to 27% w/w on dry base.

6. A dry Bechamel sauce mix characterised in that the dry mix according to claim 2 contains partially pregelatinised starch in an amount between 15% w/w to 40% w/w, preferably between 23% w/w to 35% w/w, more preferably between 25% w/w to 30% w/w on dry base.
